# EUROPÄISCHE PATENTSCHRIFT

(11) **EP 0 603 502 B1**
(45) Veröffentlichungstag und Bekanntmachung des Hinweises auf die Patenterteilung: **18.09.1996**
(21) Anmeldenummer: 93117532.7
(22) Anmeldetag: 29.10.1993
(51) Int. Cl.: B42C 7/00, B32B 31/00

(54) **Buchdeckenmaschine**
Machine for manufacturing book covers
Machine à fabriquer des couvertures de livres

(30) Priorität: 17.03.1993 DE 4308470; 09.12.1992 DE 4241387
(43) Veröffentlichungstag der Anmeldung: 29.06.1994
(73) Patentinhaber: Kolbus GmbH & Co. KG, D-32369 Rahden (DE)
(72) Erfinder: Rathert, Horst, D-32425 Minden (DE)

(56) Entgegenhaltungen:
- EP-A- 0 392 974
- DE-A- 3 338 862
- DE-C- 643 760
- US-A- 1 794 521
- US-A- 3 964 953
- E. BENDIG ET AL. 'Lehrbuch der industriellen Buchbinderei' 1990 , VERLAG BERUF + SCHULE , ITZEHOE, DE Kapitel 8.4.2 'Maschinelle Fertigung von Buchdecken' * Abbildung 8.33 * * Seite 321, Zeile 14 - Zeile 35 *
- G.M.W. WORTEL ET AL. 'Brocheren en uitgaafbinden'' 1991 , GOC-UITGEVERIJ / GAADE UITGEVERS , AMSTERDAM / HOUTEN Bind- en afwerkingstechniek Vol.2 Kapitel 8 'Boekbandvervaardinging' * Abbildung 8.6 *

## Beschreibung

Die Erfindung bezieht sich auf eine Buchdeckenmaschine gemäß dem Oberbegriff des Patentanspruchs 1.

Buchdecken bestehen bekanntlich aus einem Bezugsmaterial, aus den beiden Deckelpappen und aus einer zwischen diesen angeordneten Rückenpappe, dem sogennanten Schrenz. Die Pappen sind mit dem Überzugsmaterial ganzflächig verklebt und das über die Pappen hinausstehende Bezugsmaterial ist an allen vier Seiten eingeschlagen. In der industriellen Buchdeckenherstellung übernehmen Buchdeckenmaschinen die Arbeitsgänge.

In einer bekannten Maschine wird das zugeschnittene Bezugsmaterial, der sogenannte Deckennutzen, aus einem Stapelmagazin vereinzelt und über einen Nutzenzylinder einer Leimwalze zugeführt. Ein Ziehbalken übernimmt den beleimten Deckennutzen und legt ihn auf dem Deckentisch ab. Auf der dem Stapelmagazin für das Bezugsmaterial gegenüberliegenden Seite schieben Transporteure die zugeschnittenen Deckenpappen aus Magazinen auf einen Bereitstellungsplatz und gleichzeitig wird eine von Rolle abgelängte Rückenpappe zugeführt.

Die beiden Deckelpappen und die Rückenpappe werden von einem Saugkopf eines Doppelsaugarmes aufgenommen und nach einer Drehung des Saugarmes von 180° mit dem auf dem Deckentisch liegenden beleimten Nutzen zusammengeführt. Da bei kann es infolge des flächigen Zusammendrückens der Materialien in Verbindung mit einer Steigerung der Taktfolge zu Lufteinschlüssen kommen, was der Buchdecke ein unschönes Aussehen verleiht, bei stärkeren Lufteinschlüssen auch zum Ausschuß der Buchdecke führt.

Die Aufgabe der Erfindung besteht darin, eine Buchdeckenmaschine der gattungsgemäßen Art vorzuschlagen, bei der diese Nachteile nicht auftreten.

Die Aufgabe wird Durch die Merkmale des Kennzeichnungsteils des Patentanspruchs 1 gelöst. Vorteilhafte Ausgestaltungen der Erfindung ergeben sich aus den Unteransprüchen.

Durch das fortschreitende Überführen des Deckentisches aus der zu den Deckenpappen schräg verlaufenden Übernahmeposition in die zu den Deckenpappen parallele Stellung wandert die Kontaktlinie zwischen Deckenbezug und Deckenpappen beginnend an einer ersten Seite bis hin zur gegenüberliegenden Seite. Infolge dieses Anwalzeffektes des Deckenbezugs an die Pappen lassen sich diese und das Überzugsmaterial passergenau unter Vermeidung von Lufteinschlüssen zusammenfügen.

Die Erfindung wird nachstehend anhand der Zeichnung näher erläutert. Es zeigen:

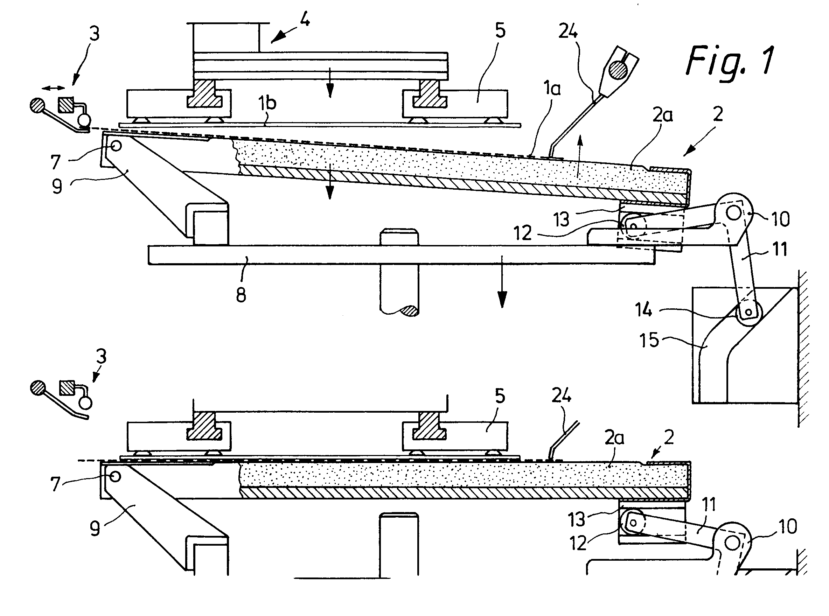

- Fig. 1: ein erstes Ausführungsbeispiel eines Buchdeckentisches in Seitenansicht in einer zu den Deckenpappen schräg verlaufenden Übernahmeposition;

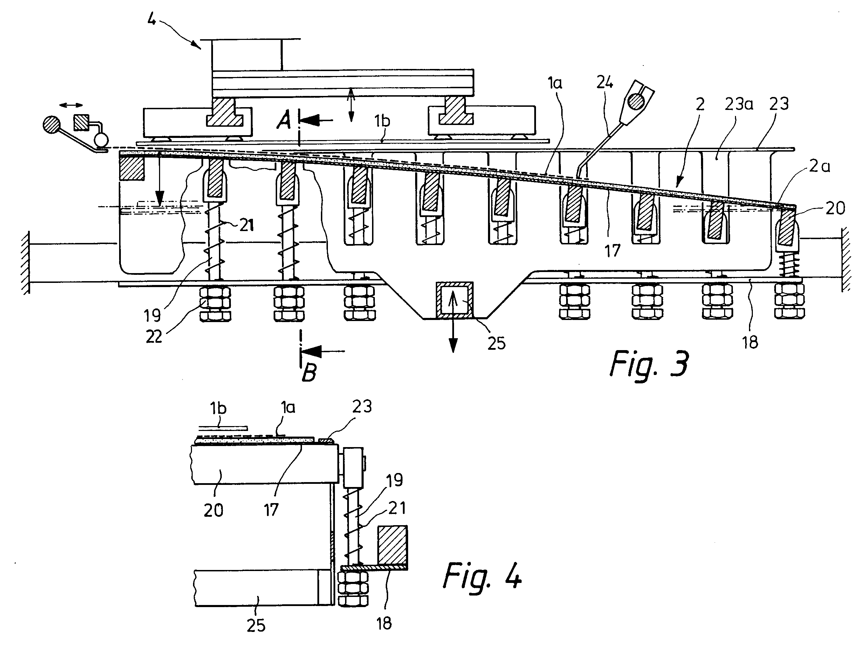

- Fig. 2: den Buchdeckentisch in der zu den Deckenpappen parallelen Stellung;
- Fig. 3: ein zweites Ausführungsbeispiel eines Buchdeckentisches in Seitenansicht in einer zu den Deckenpappen schräg verlaufenden Übernahmeposition;
- Fig. 4: den Buchdeckentisch im Schnitt gemäß Linie A-B in Fig. 3.

In einer Buchdeckenmaschine wird in bekannter Weise das Überzugsmaterial 1a, im folgenden als Nutzen bezeichnet, aus einem Magazin einer Anlegestation entnommen, vom einem Nutzenzylinder mit Greifern erfaßt und an einer Leimwalze vorbeigeführt. Nach ausgeführtem vollflächigem Beleimen übernimmt ein gradlinig vor- und zurückfahrbarer Greiferbalken 3 den beleimten Nutzen im Stillstand und legt ihn auf einem Deckentisch 2 ab. Dieser ist mit einer Auflage 2a aus einem elastischen Material beschichtet und läßt sich zwischen einer oberen, zu den Deckenpappen schräg verlaufenden Übernahmeposition in eine untere zu den Deckenpappen parallele Position verschwenken.

Zwischen dem Deckentisch 2 und eine Bereitstellungsplatz für die Deckenpappen 1b, bestehend aus zwei Seitenteilen sowie einer Rückeneinlage, auch Schrenz genannt, befindet sich ein um eine Vertikalachse drehbarer sowie in Vertikalebene auf- und abbewegbarer Transportarm 4. Dieser zwischen Bereitstellundsplatz und Deckentisch 2 durch Drehbewegung verfahrbarer Transportarm 4 nimmt über Saugköpfe 5 die bereitgestellten Pappen 1b auf und führt diese dem Deckentisch 2 zu, der sich in einer zu den Pappen 1b schräg verlaufenden Übernahmestellung befindet.

Nach Beendigung der Drehbewegung senkt sich der Transportarm 4 und die von dem Saugkopf 5 gehaltenen Pappen 1b werden mit dem Nutzen 1a zunächst an der Kopfeinschlagseite in Kontakt gebracht. Durch Schwenkbewegung des Deckentisches 2 in die untere Position in zeitlicher Übereinstimmung mit der weiteren Absenkbewegung des Transportarmes 4 nimmt der von den Pappen 1b und dem auf dem Deckentisch 2 aufliegenden Nutzen 1a eingeschlossene Winkel fortschreitend ab, dabei wandert die Kontaktlinie von der Kopfseite der Decke zur Fußseite. Es ergibt sich ein Anwalzen des Nutzens 1a an die Pappen 1b. Unmittelbar vor Beendigung des Vortransportes des Nutzens 1a auf den Deckentisch 2 mittels des Greiferbalkens 3 drücken Niederhaltefinger 24 den Nutzen 1a im Bereich des Fußeinschlags gegen den Deckentisch 2, was zum Straffhalten des Nutzens 1a führt.

Gemäß dem ersten Ausführungsbeispiel findet ein Deckentisch 2 mit einer gradlinig verlaufenden Tischplatte Verwendung. Der zwischen der oberen, zu den Deckenpappen 1b schräg gestellten Position in die untere zu den Deckenpappen 1b parallele Position verschwenkbare Deckentische 2 befindet sich mit der einen Seite an einer horizontalen Lagerachse 7 eines an einen Zwischenträge 8 befestigten Auslegers 9. An der gegenüberliegenden Seite des Deckentisches 2 erfolgt eine gesteuerte Hubbewegung über einen in einem Lagerbock 10 des Zwischenträgers 8 gelagerten Winkelhebel 11, der einerseits mit einer Steuerrolle 12 in einer Kulisse 13 des Deckentisches 2 und andererseits mit eine weiteren Steuerrolle 14 einer abgewinkelten Laufbahn 15 geführt ist. Durch das Absenken des Zwischenträgers 8 über nicht dargestellte Antriebsmittel vollzieht sich zwangsläufig die Hubbewegung des Deckentisches 2 gesteuert über den in der Laufbahn 15 und der Kulisse 13 geführten Winkelhebel 11 mit seinen Steuerrollen 12 und 14.

In dem zweiten Ausführungsbeispiel wird der Deckentisch 2 von einer biegsamen Tischplatte 17 gebildet, die in ihrer oberen zu den Deckenpappen 1b schräg verlaufenden Stellung konvex gebogen und in eine zu den Deckenpappen 1b parallele Stellung überführbar ist.

Die Tischplatte 17 wird hierzu von einem Zwischenträger 18 aufgenommen, wobei eine Vielzahl von Zugankern 19 beidseitig an in Querrichtung orientierten Tragleisten 20 der Tischplatte 17 angreifen und diese sich über Druckfedern 21 auf den Zuganker 19 an dem Zwischenträger 18 abstutzt. Durch Vorspannen der einzelnen Druckfedern 21 über Schraubenverbindung 22 unter Abstützung an dem Zwischenträger 18 läßt sie die konvexe Biegung der Tischplatte 17 einstellen.

Auf die Tischplatte 17 greifen von sich gegenüberliegenden Seiten winklig geformte Zugschienen 23, die über nicht dargestellte Betätigungsmittel unter Beibehaltung ihrer Horizontallage aus einer oberen in eine untere Position verfahrbar sind und dabei die Tischplatte 17 aus der oberen konvex gebogenen Übernahmeposition unter fortschreitender Abnahme des von den Deckenpappen 1b und dem Deckenbezug 1a eingeschlossenen Winkels in die untere waagerechte Endposition verbringen. Die Zugschienen 23 sind durch eine gemeinsame Traverse 25 verbunden, an der das Betätigungsmittel angreift, und sind mit Ausnehmungen 23a versehen, die von den Tragleisten 20 der Tischplatte 17 durchgriffen werden.

## Patentansprüche

1. Buchdeckenmaschine mit Anlegestationen für die Deckenbezüge (1a) und Deckenpappen (1b), mit einer Beleimeinrichtung für die Deckenbezüge (1a) und mit einer Einrichtung zum Zusammenfügen der Deckenbezüge (1a) und Deckenpappen (1b), bestehend aus einen höhenverfahrbaren, die Deckenpappen (1b) tragenden Saugkopf (5) und aus einen die Deckenbezüge (1a) tragenden Deckentisch (2), dadurch gekennzeichnet, daß der Deckentisch (2) mit einen zugeführten Deckenbezug (1a) aus einer zu den von dem Saugkopf (5) getragenen Deckenpappen (1b) schräg verlaufenden Stellung in eine zu den Deckenpappen (1b) parallele Stellung unter fortschreitender Abnahme des von den Deckenpappen (1b) und dem Deckenbezug (1a) eingeschlossenen Winkels überführbar ist.

2. Buchdeckenmaschine nach Anspruch 1, dadurch gekennzeichnet, daß der Deckentisch (2) aus der zu den Deckenpappen (1b) schräg verlaufenden Stellung in die zu den Deckenpappen (1b) parallele Stellung schwenkbar ist bei gleichzeitiger Abwärtsbewegung des Saugkopfes (5) synchron zu der Schwenkbewegung des Deckentisches (2).

3. Buchdeckenmaschine nach Anspruch 1 oder 2, dadurch gekennzeichnet, daß sich der Deckentisch (2) auf einem Zwischenträger (8) befindet und auf der einen Seite an einer Horizontalachse (7) eines Auslegers (9) des Zwischenträgers (8) gelagert ist und auf der gegenüberliegenden Seite über Steuermittel (11-15) aus der zu den Deckenpappen (1b) schräg verlaufenden Stellung in die zu den Deckenpappen (1b) parallele Stellung anhebbar ist.

4. Buchdeckenmaschine nach Anspruch 1 bis 3, dadurch gekennzeichnet, daß die Steuermittel von einem am Zwischenträger (8) gelagerten Winkelhebel (11) mit Steuerrollen (12, 14) sowie aus einer Kulisse (13) am Deckentisch (2) und einer winklig verlaufenden Bahn (15) gebildet sind, in denen die Steuerrollen (12, 14) geführt sind.

5. Buchdeckenmaschine nach Anspruch 1 oder 2, dadurch gekennzeichnet, daß der Deckentisch (2) aus einer biegsamen Tischplatte (17) besteht, die in der zu den Deckenpappen (1b) schräg verlaufenden Stellung konvex gebogen und in eine sich zu den Deckenpappen (1b) parallele Stellung überführbar ist.

6. Buchdeckenmaschine nach Anspruch 5, dadurch gekennzeichnet, daß sich die Tischplatte (17) an einem Zwischenträger (18) befindet und eine Vielzahl von Zugankern (19) aufweist, daß sich die Zuganker (19) über Druckfedern (21) an dem Zwischenträger (18) abstützen und einzeln vorspannbar sind, derart, daß sich eine konvexe Biegung der Tischplatte (17) einstellt und daß auf die Tischplatte (17) Zugschienen (23) greifen, die über Betätigungsmittel entgegen der Wirkung der Druckfedern (21) in horizontaler Lage aus einer oberen in eine untere Position unter Mitnahme der Tischplatte (17) verfahrbar sind.

7. Buchdeckenmaschine nach Anspruch 1 bis 6, dadurch gekennzeichnet, daß der Deckentisch (2) mit einer Auflage (2a) aus einen elastischen Material versehen ist.

8. Buchdeckenmaschine nach Anspruch 1 bis 7, gekennzeichnet durch den in Einlaufrichtung betrachtet hinteren Kantenbereich des Deckenbezugs (1a) im Sinne eines Straffziehens beim Vortransport gegen den Deckentisch (2) drückende Niederhaltefinger (24).

## Claims

1. Book cover machine with feeder stations for the cover coverings (1a) and cover boards (1b), with a glue-application arrangement for the cover coverings (1a), and with an arrangement for assembling the cover coverings (1a) and cover boards (1b), consisting of a vertically movable suction head (5) which carries the cover boards (1b), and a cover table (2) which carries the cover coverings (1a), characterized in that the cover table (2) can be transferred, with a cover covering (1a) which has been supplied, from a position inclined to the cover boards (1b) carried by the suction head (5), into a position parallel with them, and as this movement occurs, the angle included by said cover boards (1b) and cover covering (1a) progressively diminishes.

2. Book cover machine according to Claim 1, characterized in that the cover table (2) can be swung from the position inclined to the cover boards (1b), and into the position parallel with them, while at the same time the suction head (5) descends in synchronism with the swinging movement of said cover table (2).

3. Book cover machine according to Claim 1 or Claim 2, characterized in that the cover table (2) is located on an intermediate supporting member (8), is mounted at one side on a horizontal axle (7) belonging to a projecting member (9) associated with said intermediate supporting member (8), and can be lifted at the opposite side, through the agency of control means (11-15), from the position inclined to the cover boards (1b), and into the position parallel with them.

4. Book cover machine according to any one of Claims 1 to 3, characterized in that the control means are formed by an angle lever (11) which is mounted on the intermediate supporting member (8) and has control rollers (12, 14), and by a slot-link (13) on the cover table (2) and a bent track (15), the said control rollers (12, 14) being guided therein.

5. Book cover machine according to Claim 1 or Claim 2, characterized in that the cover table (2) consists of a flexible table plate (17), which in the position inclined to the cover boards (1b) is bent to a convex shape, and which can be transferred to a position parallel with said cover boards (1b).

6. Book cover machine according to Claim 5, characterized in that the table plate (17) is located on an intermediate supporting member (18) and has a multiplicity of tie bolts (19), in that the tie bolts (19) are supported on said intermediate supporting member (18) via compression springs (21) and can be preloaded individually, in a manner such that the table plate (17) develops a convex curvature, and in that pulling rails (23) engage onto said table plate (17), and said pulling rails (23) can be moved, through the agency of operating means, counter to the action of said compression springs (21), from an upper position to a lower position, in a horizontal orientation and at the same time pulling said table plate (17) with them.

7. Book cover machine according to any one of Claims 1 to 6, characterized in that the cover table (2) is provided with a facing layer (2a), composed of a resilient material.

8. Book cover machine according to any one of Claims 1 to 7, characterized by hold-down fingers (24) which press the rear edge area of the cover covering (1a), as viewed in the ingoing direction, against the cover table (2), so as to exert a tensioning effect during the forward transport.

## Revendications

1. Machine pour la fabrication de couvertures de livres comportant des stations d'alimentation en garnitures de couverture (1a) et cartons de couverture (1b), un dispositif d'encollage pour les garnitures de couverture (1a), et, un dispositif pour assembler les garnitures (1a) et les cartons de couverture (1b) composé d'une tête aspirante (5) déplaçable en hauteur et portant les cartons de couverture (1b) et d'une table (2) portant les garnitures (1a), *caractérisée en ce que* la table (2) qui a été alimentée par une garniture (1a) est déplaçable d'une position inclinée par rapport aux cartons de couverture (1b) portés par la tête aspirante (5) dans une position parallèle auxdits cartons de couverture, grâce à une diminution progressive de l'angle déterminé par les cartons de couverture (1b) et la garniture (1a).

2. Machine pour la fabrication de couvertures de livres selon la revendication 1 *caractérisée en ce que* la table (2) peut pivoter de sa position inclinée par rapport aux cartons de couverture (1b) dans sa position parallèle auxdits cartons (1b), la tête aspirante (5) se déplaçant simultanément vers le bas de manière synchrone au mouvement de pivotement de la table (2).

3. Machine pour la fabrication de couvertures de livres selon les revendications 1 et 2 *caractérisée en ce que* la table (2) est disposée sur un support intermédiaire (8) en étant articulée d'un côté sur l'axe horizontal (7) d'un bras (9) du support intermédiaire (8) et en pouvant être soulevée du côté opposé par des moyens de commande (11) à (15) depuis sa position inclinée par rapport aux cartons de couverture (1b) dans sa position parallèle auxdits cartons de cou-verture (1b).

4. Machine pour la fabrication de couvertures de livres selon les revendications 1 à 3 *caractérisée en ce que* les moyens de commande sont constitués d'un levier coudé (11) articulé sur le support intermédiaire (8) et comportant des galets de guidage (12), (14) qui se déplacent dans une coulisse (13) disposée sur la table (2) et dans une glissière coudée (15).

5. Machine pour la fabrication de couvertures de livres selons les revendications 1 ou 2 *caractérisée en ce que* la table (2) est constituée d'un plateau flexible (17) qui présente une flexion convexe lorsqu'elle est en position inclinée par rapport aux cartons de couverture (1b) et qui peut se déplacer dans une position parallèle auxdits cartons de couverture (1b).

6. Machine pour la fabrication de couvertures de livres selon la revendication 5 *caractérisée en ce que* le plateau de table (17) est portée par un support intermédiaire (18) et comporte de multiples tirants d'ancrage (19) qui s'appuient sur le support intermédiaire (18) par des ressorts de pression (21) et peuvent être prétendus individuellement de façon à provoquer une fexion convexe du plateau (17) et *en ce que* sur ledit plateau (17) sont engagés des rails de traction (23) qui sont déplaçables, grâce à des moyens d'actionnement, à l'encontre de la pression des ressorts (21), depuis une position supérieure dans une position inférieure en entraînant le plateau de table (17), tout en conservant leur orientation horizontale.

7. Machine pour la fabrication de couvertures de livres selon les revendications 1 à 6 *caractérisée en ce que* la table (2) est pourvue d'un revêtement (2a) en matériau élastique.

8. Machine pour la fabrication de couvertures de livres selon les revendications 1 à 7 *caractérisée par* des doigts de pression (24) qui appuient la zone du bord, arrière dans le sens de l'arrivée, de la garniture (1a) sur la table (2) en vue de maintenir ladite garniture (1a) tendue dans le sens de l'avancement.
